# EUROPEAN PATENT APPLICATION

(11) **EP 1 190 626 A1**
(43) Date of publication of application: **27.03.2002**
(21) Application number: 01121794.0
(22) Date of filing: 20.09.2001
(51) Int. Cl.: A23L 1/214, A23L 1/0528

(54) **Heterogeneous food product made from Konjak and manufacturing method therefor**

(30) Priority: 20.09.2000 JP 2000285059; 27.11.2000 JP 2000359332
(71) Applicant: Mukohata, Yasuo, Osaka 546-0031 (JP)
(72) Inventor: Mukohata, Yasuo, Osaka 546-0031 (JP)
(74) Representative: VOSSIUS & PARTNER

(57) **Abstract**

Disclosed a heterogeneous *konjak* and a method for manufacturing the same. In order to provide a *konjak* different in feelings on the tongue and to the teeth, the heterogeneous *konjak* comprises plural base *konjak* members formed in various shapes and having different properties and a filler *konjak* enclosing the base *konjak* members. The base *konjak* members differ from the filler *konjak* in hardness due to water content and/or in content of texture induced partly or thoroughly by thawing frozen base *konjak* members. The heterogeneous *konjak* is made by preparing firstly the base *konjak* members in the above form and secondly mixing the separately prepared filler *konjak* and said base *konjak* members and then gelating the total mixture.

## Description

The present invention relates to an edible *konjak* and its manufacturing method, especially a heterogeneous *konjak* and a method for manufacturing the same. The *"konjak"* means a gelatinous food made from devil's tongue starch.

Edible *konjak* foods are sometimes prepared from the ground matter of *konjak* bulbs, but are generally prepared with refined *konjak* flour made from *konjak* bulbs. For preparing the refined *konjak* flour, *konjak* bulbs are washed, peeled, dried, chopped, and subsequently ground to obtain crude powder, then sieved for separating the refined flour. Konjak is generally prepared by slowly mixing 10 volume % of the *konjak* flour with lukewarm water, agitating and then cooling the mixture by standing to bring the *konjak* flour to sufficiently absorb water, subsequently adding about 1.5 times volume of lukewarm water divided in several times during continuous kneading, adding a coagulant, e.g., lime milk (prepared by dissolving 5 g of slaked lime in 350 ml of water) or a sodium carbonate solution (prepared by dissolving 10 g of sodium carbonate in 350 ml of water) when the mixture becomes pasty and sufficiently colloidal, agitating the mixture, pouring the mixture into a big mold, warming the mixture, taking the mixture out of the mold when the mixture solidifies to some extent, cutting the half-solidified mixture in a predetermined size and shape, putting the cut pieces into slaked lime-containing warm water (prepared by dissolving 4 g of slaked lime in 100 l of water, at about 50°C), warming for 15-30 minutes and removing the lye (harsh taste) by moving the pieces into clear and fresh water.

As general *konjak* products, those having angular and round shapes are common. As specific *konjak* products, noodles made of *konjak* (*konjak* spaghetti), *shirataki* (fine, whitish strings of *konjak)* and frozen *konjak* are cited. As particular *konjak* products, those enclosing ingredients such as peels of *konjak* bulbs, cayenne, green laver, seaweed (edible brown algae, *Undaria pinnatifida*, etc.) and the like are available. The *konjak* itself is little digestive, is absorbed little and has little nutritive value, but its elastic feeling to the teeth is favored, especially by Japanese, so the *konjak* is used as a food material for various cooking and said to be effective for improving constipation and for dieting.

However, they cannot bring about particular properties other than common feelings to the teeth and on the tongue as *konjak,* since they are homogeneous as *konjak* itself though the *konjak* products available as food materials have different elastic properties depending on difference in water contents.

One object of the present invention is to provide a *konjak* different in feelings on the tongue and to the teeth and provide a method for manufacturing the same. That is, the present invention is to bring the conventionally homogeneous *konjak* to a heterogeneous one and attain the object.

A heterogeneous *konjak* can be obtained according to the present invention in that it comprises plural base *konjak* members formed in various shapes and having different properties and a filler *konjak* enclosing the base *konjak* members.

The base *konjak* members may be formed in a granular, string-like and/or tabular shape.

The base *konjak* members differs from the filler *konjak* (1) in hardness due to water content and/or (2) in content of texture induced partly or thoroughly by thawing the base *konjak* members frozen beforehand.

Such heterogeneous *konjak* is manufactured by a method in that it comprises:
a first step for preparing base *konjak* members by;
   (a) adding water or lukewarm water to *konjak* flour or a ground matter of *konjak* bulbs to knead, adding a coagulant and kneading the mixture, pouring the mixture into a mold, warming the mixture to form a gel, taking out the gel from the mold and shaping the gel into a sheet-like, string-like, granular, dumpling-like shape or the like, or
   (b) after adding the coagulant, warming the mixture to form the gel during shaping the mixture into the sheet-like, string-like, granular, dumpling-like shape or the like, or
   (c) after shaping the gel in a sheet-like, string-like, granular, dumpling-like shape or the like, the shaped base *konjak* is frozen thoroughly or partly in a refrigerator and then thawed, and
a second step for preparing a filler *konjak* by;
adding water or lukewarm water to *konjak* flour or a ground matter of *konjak* bulbs in a different amount from that added to the base *konjak* to knead, adding the coagulant and kneading the mixture, mixing the kneaded mixture with the aforesaid shaped base *konjak,* introducing the mixture into the mold and warming and gelating the total mixture of the base *konjak* and the post-added *konjak* material to form the filler *konjak*.

In the method, the *konjak* flour itself may be used as a raw material for the filler *konjak* instead of the *konjak* flour kneaded with water or the ground matter of *konjak* bulbs. In this case, the second step for preparing a filler *konjak* may be replaced by a step of powdering *konjak* flour on the base *konjak,* putting it into a mold, warming the mold for gelating the *konjak* flour to adhere the base *konjak* together.

In carrying out the method of this invention, the water content of the base *konjak* can be brought to relatively lower than one of the filler *konjak*. In this case, the filler part of the heterogeneous *konjak* having the higher water content becomes relatively soft and less elastic. When this heterogeneous *konjak* is cooked and seasoned, the soft part is easily seasoned earlier, thus, difference occurs not only in feeling to the teeth but in taste of the part having higher elasticity, so the heterogeneous *konjak* is quite different from the conventional *konjak* in palatability and taste. Since the freeze-thaw base *konjak,* even made at the same content with the filler *konjak,* has higher texture content and spongier than the *konjak* without frozen history, some of the above properties of the heterogeneous *konjak* are enhanced.

In preparing the base *konjak* or the filler *konjak* or both of them according to the present invention, third ingredients such as peels of *konjak* bulbs, cayenne, sesame, green lava, sea weeds (brown algae, *Undaria pinnatifida*, etc.), minced onion and the like can be added to improve taste, color appearance or physical appearance.
Other objects and advantages of the present invention will be understood from the following description of the heterogeneous *konjak* and the method for manufacturing the same according to one preferred embodiment of the present invention.

### Manufacturing Example

The base *konjak* is obtained by adding 12 g of commercially available *konjak* flour into 400 ml of water, kneading the flour for two hours by a mixer [Kenmix (trademark) KM600, in 140 rpm main shaft revolution and 60 rpm precessional revolution], adding 20 ml of limewater (made by dissolving 1.5 g of calcium hydroxide in 100 ml of water), kneading the mixture for further 10 minutes, injecting the kneaded one into a mold, promoting gelation of the (kneaded) *konjak* (flour) in the mold by warming on a hot water bath for 20 minutes to obtain about 400 ml of the base *konjak*. The aforesaid base *konjak* is put into the aforesaid mixer attached with a mincing attachment and treated to obtain the granular base *konjak* having about 3mm average diameter. The yield is about 250 ml.

While, the desired heterogeneous *konjak* is obtained by adding 8 g of the commercially available *konjak* flour into 400 ml of water, kneading the flour by the aforesaid mixer for 2 hours, adding 20 ml of the aforesaid limewater and further the aforesaid granular base *konjak*, kneading the mixture for about 3 minutes, subsequently putting the mixture in the mixer into a mold having approximately 9 cm inner diameter and approximately 4 cm depth and promoting gelation of the filler *konjak* in the mold by warming the mold on a hot water bath for 30 minutes.

### Test Example

The heterogeneous *konjak* obtained in the above-described example of the production is sliced in a circular disc-like shape (about 1 cm thick), then in a semicircular shape. The 8 sliced pieces of the heterogeneous *konjak* are added with tap water in which 1 piece (4.2 g) of consommé soup element [Maggy bouillon (trademark)], 15 ml of a thick sauce [Kagome Tonkatsu Sauce (trademark)] and 10 g of butter are dissolved and cooked for 1 hour.

Seven panelists (samplers) including the inventor tried to taste the obtained pieces of seasoned heterogeneous *konjak*. The impressions of the panelists are as follows:
Panelist A: I cannot realize that this is a *konjak* from its appearance and feeling on the tongue and to the teeth.
Panelist B: I cannot judge that this is a *konjak* from its palatability. It has a curious texture something like meat.
Panelist C: It is well seasoned though it is *konjak,* and its palatability is similar to meat.
Panelist D: I might not have known what I was tasting if had no information on the *konjak.* The feeling to the teeth is similar to that of hardened minced meat.
Panelist E: Suitable feeling to the teeth and feeling different from the aforesaid feeling are well spreading in the mouth. I think that the amount of the dama (granules of the base *konjak*) could be larger and when it is seasoned in a Japanese style, it could taste beyond my expectation.
Panelist F: It tastes like hamburger, but it seems that it contains a little more water. I feel that the base *konjak* should be a little smaller.
Panelist G: It is well seasoned in a short cooking time. The palatability could be fresher if the glueing material (the filler *konjak*) would be a little harder and less in its amount.

### CONSIDERATION:

It seems that the heterogeneous *konjak* is suitable for a new food material, though some ideas such as to bring the base *konjak* a little harder, to bring the granular size smaller, to reduce the amount of the filler *konjak* relative to the base *konjak* and so forth are considered to be necessary. Comparing with the conventional homogeneous *konjak,* the heterogeneous *konjak* is not only different in appearance, hand feeling, palatability, feeling on the tongue and to the teeth, but also good in penetration of seasonings during cooking and can be cooked in a shorter time. It is considered that the interface between the base *konjak* and the filler *konjak* effectively contributes to penetrate seasonings into the heterogeneous *konjak.*

As may be understood from the above, the heterogeneous *konjak* of the present invention comprises the base *konjak* having different hardness/elasticity due to water content and/or spongy texture content induced by freezing-thawing from the filler *konjak* enclosing the base *konjak,* thereby providing following advantages:
a) In comparison with the conventional "homogeneous" *konjak*, the heterogeneous *konjak* is not only quite different in appearance, hand feeling, palatability, feeling on the tongue and to the teeth, but also the part of the *konjak* having the higher water content is easily and rapidly seasoned when cooked with a seasoning. Thus, a cooking time is brought to be shorter by constituting the filler *konjak* with the one having the higher Water content.
b) The manufacturing of the heterogeneous *konjak* can be easily carried out since both of the base *konjak* and the filler *konjak* can be made in a conventional method.

## Claims

1. A heterogeneous *konjak* comprising plural base *konjak* members formed in various shapes and having different properties and a filler *konjak* enclosing the base *konjak* members.

2. A heterogeneous *konjak* according to Claim 1, wherein the base *konjak* members are formed in a granular, string-like and/or tabular shape.

3. A heterogeneous *konjak* according to Claim 1, wherein the base *konjak* members differ from the filler *konjak* in hardness due to water content and/or in content of texture induced partly or thoroughly by thawing frozen base *konjak* members.

4. A method for manufacturing a heterogeneous *konjak* comprising:
a first step for preparing base *konjak* members by;
(a) adding water or lukewarm water to *konjak* flour or a ground matter of *konjak* bulbs to knead, adding a coagulant and kneading the mixture, pouring the mixture into a mold, warming the mixture to form a gel, taking out the gel from the mold and shaping the gel into a sheet-like, string-like, granular, dumpling-like shape or the like, or
(b) after adding the coagulant, warming the mixture to form the gel during shaping the mixture into the sheet-like, string-like, granular, dumpling-like shape or the like, or
(c) after shaping the gel in a sheet-like, string-like, granular, dumpling-like shape or the like, the shaped base *konjak* is frozen thoroughly or partly in a refrigerator and then thawed, and
a second step for preparing a filler *konjak* by;
adding water or lukewarm water to *konjak* flour or a ground matter of *konjak* bulbs in a different amount from that added to the base *konjak* to knead, adding the coagulant and kneading the mixture, mixing the kneaded mixture with the aforesaid shaped base *konjak,* introducing the mixture into the mold and warming and gelating the total mixture of the base *konjak* and the post-added *konjak* material to form the heterogeneous *konjak*.

5. A method for manufacturing a heterogeneous *konjak* comprising:
a first step for preparing base *konjak* members by;
(a) adding water or lukewarm water to *konjak* flour or a ground matter of *konjak* bulbs to knead, adding a coagulant and kneading the mixture, pouring the mixture into a mold, warming the mixture to form a gel, taking out the gel from the mold and shaping the gel into a sheet-like, string-like, granular, dumpling-like shape or the like, or
(b) after adding the coagulant, warming the mixture to form the gel during shaping the mixture into the sheet-like, string-like, granular, dumpling-like shape or the like, or
(c) after shaping the gel in a sheet-like, string-like, granular, dumpling-like shape or the like, the shaped base *konjak* is frozen thoroughly or partly in a refrigerator and then thawed, and
a second step for preparing a filler *konjak* by;
powdering *konjak* flour on the base *konjak,* putting it into a mold, warming the mold for gelating the *konjak* flour to adhere the base *konjak* together.
